# EUROPEAN PATENT SPECIFICATION

(11) **EP 3 996 516 B1**
(45) Date of publication and mention of the grant of the patent: **25.03.2026**
(21) Application number: 20737034.7
(22) Date of filing: 10.07.2020
(51) Int. Cl.: A23J 3/14, A23J 3/22, A23J 3/26, A23J 3/16, A23J 3/18

(54) **METHOD OF MAKING A GROUND MEAT ANALOGUE PRODUCT**
VERFAHREN ZUR HERSTELLUNG EINES HACKFLEISCHERSATZPRODUKTES
PROCÉDÉ DE FABRICATION D'UN PRODUIT ANALOGUE DE VIANDE HACHÉE

(30) Priority: 12.07.2019 EP 19186158
(43) Date of publication of application: 18.05.2022
(73) Proprietor: Société des Produits Nestlé S.A., 1800 Vevey (CH)
(72) Inventor: DREHER, Johannes, 70193 STUTTGART (DE); HUBER, Sandra, 73066 UHINGEN (DE); PIBAROT, Patrick, 1820 TERRITET (CH); RAY, Joydeep, 1066 Epalinges (CH); SCHMITT, Christophe, Joseph, Etienne, 1077 SERVION (CH); WEISS, Jochen, 72664 KOHLBERG (DE)
(74) Representative: Slaven, John William
(86) International application number: PCT/EP2020/069548
(87) International publication number: WO 2021/009043

(56) References cited:
- US-A1- 2019 133 163
- US-B2- 10 172 381

## Description

### Background of the invention

The vegan food market is regularly launching plant-based burgers in response to consumer demand. The challenge is to produce a plant-based burger with as much appeal as a meat burger and with the appropriate juiciness and mouthfeel.

Existing plant based burgers are for the most part produced by mixing rehydrated texturized vegetable protein (TVP) with a binder, fat oil and various colorings and flavorings. The burger cohesiveness is usually obtained by gelation of egg white protein or the use of gums and fibers. These do not qualify as vegan or clean label solutions.

TVP is manufactured using dry extrusion (extrudate moisture below 25%) and dried afterwards to a water activity below 0.6 to ensure their microbiological stability. This dry extrusion process results in chunks with a sponge-like structure due to expansion at the extruder die. The TVP can then be rehydrated by soaking in water to get a spongy meat-like texture and mouthfeel. Such recipes using TVP and mixing/molding result in unsatisfactory mouthfeel.

Some companies use wet extrusion and perforated die with knife cutting to produce minced meat analogues. The taste and mouthfeel are improved as compared to TVP addition. In addition, patent application US2017/0105438 describes the use of an agar-based gelled emulsion combined with texturized proteins in order to produce a more visually appealing burger. However, this is not a clean label solution due to the presence of hydrocolloids.

There is a clear need for plant-based burgers which satisfy the consumer in terms of taste, texture and appearance and at the same time are clean label.

US 2019/133163 A1 discloses a method of making a ground meat analogue product.

US 10172381 B2 discloses a method of making a ground tissue and burger replica.

### Summary of the invention

The invention is in the general field of plant-based meat alternative products.

The invention is set out in the appended set of claims.

Not according to the invention disclosed is a method of making a meat analogue product, said method comprising preparing a protein extrudate, preparing a protein dispersion, preparing a fat mimetic, comminution of the protein extrudate and fat mimetic, and mixing.

Not according to the invention disclosed is a method of making a ground meat analogue product, said method comprising preparing a plant protein extrudate, preparing a plant protein dispersion, preparing a fat mimetic by emulsification, comminution of the plant protein extrudate and fat mimetic, mixing, optionally molding into a shape.

The invention relates to a method of making a ground meat analogue product, said method comprising
a. Preparing a plant protein extrudate by wet extrusion;
b. Preparing a plant-based binder, wherein the plant-based binder is prepared by;
   (i) Mixing 14 -16 wt% soy protein isolate with water, and adding sodium chloride to the mix at a final concentration of 0.2 - 0.4M
   (ii) Heating until gel formation, preferably to 85°C
   (iii) cooling
c. Preparing a fat mimetic by emulsifying a protein dispersion and a lipid phase;
d. Comminution of the plant protein extrudate
e. Comminution of the fat mimetic;
f. Mixing the plant-based binder with the comminuted plant protein extrudate and the comminuted fat mimetic;
g. Optionally molding into a shape.

Not according to the invention disclosed is a ground meat analogue product comprising plant protein extrudate, plant protein dispersion; and fat mimetic comprising a protein dispersion.

Not according to the invention disclosed is a ground meat analogue product comprising:
a. Plant protein extrudate;
b. 10 - 20% (w/w) plant protein dispersion; and
c. Fat mimetic comprising a protein dispersion emulsified in a lipid phase.

### Description of the invention

The invention relates to a method of making a ground meat analogue product, said method comprising
a. Preparing a plant protein extrudate by wet extrusion;
b. Preparing a plant-based binder, wherein the plant-based binder is prepared by;
   (i) Mixing 14 -16 wt% soy protein isolate with water, and adding sodium chloride to the mix at a final concentration of 0.2 - 0.4M
   (ii) Heating until gel formation, preferably to 85°C
   (iii) cooling
c. Preparing a fat mimetic by emulsifying a protein dispersion and a lipid phase;
d. Comminution of the plant protein extrudate
e. Comminution of the fat mimetic;
f. Mixing the plant-based binder with the comminuted plant protein extrudate and the comminuted fat mimetic;
g. Optionally molding into a shape.

In some embodiments, the plant protein extrudate is a textured plant protein extrudate.

In some embodiments, the plant protein extrudate is a fibrous plant protein extrudate.

In some embodiments, the plant protein extrudate has a water content of not less than 45% (w/w).

In some embodiments, the plant protein extrudate is a blend of more than one plant protein.

In some embodiments, the plant protein extrudate has a water content of not less than the glass transition temperature of the plant protein extrudate at a consumption temperature of the ground meat analogue product of between 30 to 60°C.

In some embodiments, the plant protein extrudate and/or the fat mimetic further comprises coloring and/or flavoring, preferably meat flavoring.

In some embodiments, the plant protein extrudate is cooked, preferably in vegetable broth.

In the method of the invention, the plant-based binder is prepared by;
(i) Mixing 14 -16 wt% soy protein isolate with water, and adding sodium chloride to the mix at a final concentration of 0.2 - 0.4M
(ii) Heating until gel formation, preferably to 85°C
(iii) cooling

In the method of the invention, comprises sodium chloride is added to the mix at a final concentration of 0.2 - 0.4M.

In some embodiments, the fat mimetic is prepared by emulsifying a mixture of 30% w/w of a protein dispersion, preferably comprising a protein isolate, and 70% w/w of a lipid phase, preferably canola oil, or a mixture of canola oil and solid fat.

In some embodiments, the emulsification mixture is heated to about 85°C for about 1 hour, followed by cooling.

In some embodiments, the protein dispersion is a protein isolate dispersion or a protein concentrate dispersion.

In some embodiments, the protein dispersion is pre-heated at temperatures not greater than 95°C.

In some embodiments, the lipid phase is pre-heated to about 35°C.

In some embodiments, the lipid phase is mixed into the protein dispersion.

In some embodiments, about 0.2 - 0.6M sodium chloride is added, preferably after emulsification.

Not according to the invention disclosed is a method of making a ground meat analogue product, said method comprising
a. Preparing a plant protein extrudate by wet extrusion;
b. Preparing a mix of 14 to 16% (w/w) soy protein in water, heating until gel formation and cooling:
c. Preparing a fat mimetic by emulsifying a mixture of about 30% (w/w) protein dispersion and about 70% (w/w) of a lipid phase, and about 0.2 to 0.6M sodium chloride;
d. Comminution of the plant protein extrudate
e. Comminution of the fat mimetic;
f. Mixing;
g. Optionally molding into a shape.

In some embodiments, about 0.4M sodium chloride is added.

In some embodiments, the final concentration of protein in the emulsifying mixture is about 3 wt%.

In some embodiments, the protein is prepared using a soy, potato, pea, pumpkin, wheat or canola protein isolate, preferably soy protein isolate.

In some embodiments, the protein dispersion comprises 10 to 16 wt% soy protein isolate, preferably about 14 - 16 wt%.

In some embodiments, the ground meat analogue is shaped into burgers or meatballs.

Not according to the invention disclosed is a ground meat analogue product comprising:
a. Plant protein extrudate;
b. 0 - 20% (w/w) plant protein dispersion; and
c. Fat mimetic comprising a protein dispersion emulsified in an lipid phase.

In some embodiments, the plant protein extrudate is a textured fibrous plant protein extrudate.

In some embodiments, the ground meat analogue product further comprises coloring and/or flavoring, preferably meat flavoring.

In some embodiments, the plant protein dispersion comprises soy protein isolate, water and salt.

In some embodiments, the fat mimetic comprises about 30% (w/w) of a protein isolate dispersion comprising a protein isolate and about 70% (w/w) of a lipid phase.

In some embodiments, the protein dispersion is a protein isolate dispersion or a protein concentrate dispersion.

In some embodiments, the protein isolate dispersion is a soy, potato, pea, pumpkin or canola protein isolate dispersion, preferably a soy protein isolate dispersion.

In some embodiments, the protein isolate dispersion comprises 10 to 16 wt% soy protein isolate, preferably about 14 - 16 wt%.

Not according to the invention disclosed is a ground meat analogue product comprising:
a. Plant protein extrudate;
b. 14 - 16% (w/w) soy protein isolate; and
c. Fat mimetic comprising a protein dispersion emulsified in an lipid phase.

In some embodiments, the ground meat analogue product is obtained or obtainable by a method according to the invention.

In some embodiments, the ground meat analogue product is devoid of animal products, for example ingredients derived from egg.

In some embodiments, the ground meat analogue product is devoid of additives, for example hydrocolloids. Typically, the ground meat analogue is devoid of methylcellulose. Typically, the ground meat analogue is devoid of gums. Typically, the ground meat analogue is devoid of alginates. Typically, the ground meat analogue is devoid of modified starch.

Not according to the invention disclosed is the use of a plant protein extrudate, plant protein dispersion and/or fat mimetic in a ground meat analogue product.

### Detailed description of the invention

### Definitions

As used herein, "about" is understood to refer to numbers in a range of numerals, for example the range of -30% to +30% of the referenced number, or -20% to +20% of the referenced number, or -10% to +10% of the referenced number, or -5% to +5% of the referenced number, or -1% to +1% of the referenced number. All numerical ranges herein should be understood to include all integers, whole or fractions, within the range. Moreover, these numerical ranges should be construed as providing support for a claim directed to any number or subset of numbers in that range.

The products disclosed herein may lack any element that is not specifically disclosed herein.

Thus, a disclosure of an embodiment using the term "comprising" includes a disclosure of embodiments "consisting essentially of" and "consisting of" the components identified. Similarly, the methods disclosed herein may lack any step that is not specifically disclosed herein. Thus, a disclosure of an embodiment using the term "comprising" includes a disclosure of embodiments "consisting essentially of" and "consisting of" the steps identified. Any embodiment disclosed herein can be combined with any other embodiment disclosed herein unless explicitly and directly stated otherwise.

Unless defined otherwise, all technical and scientific terms and any acronyms used herein have the same meanings as commonly understood by one of ordinary skill in the art in the field of the invention. Although any compositions, methods, articles of manufacture, or other means or materials similar or equivalent to those described herein can be used in the practice of the present invention, the preferred compositions, methods, articles of manufacture, or other means or materials are described herein.

As used herein, the term "additive" includes one or more of hydrocolloids (e.g. carboxymethylcellulose, methylcellulose, hydroxypropylmethylcellulose, konjac gum, carragenans, xanthan gum, gellan gum, locust bean gum, alginates, agar, gum Arabic, gelatin, Karaya gum, Cassia gum, microcrystalline cellulose, ethylcellulose); emulsifiers (e.g. lecithin, mono and diglycerides, PGPR); whitening agents (e.g. titanium dioxide); plasticizers (e.g. glycerine); anti-caking agents (e.g. silicon-dioxide).

### Plant protein extrudate

The plant protein extrudate in the method of the invention may be prepared using a twin screw extruder.

The resulting structured product may have substantially aligned fibers. Wheat gluten may be used, for example in combination with pea protein isolate. Dough can be prepared in a mixer at a mixing speed of about 30 rpm.

The ingredient list of the extrudate can include, for example, pea protein isolate, wheat gluten, micronized pea protein TVP.

The ingredient list of the extrudate can include, for example, pea protein isolate, wheat gluten, micronized pea protein TVP, starch, iodized salt (NaCl), base note Aroma mixture (meat/Pork), Soy protein isolate, Rapeseed oil, coloring ingredient.

The ingredient list can include, for example, pea protein isolate, wheat gluten, micronized pea protein TVP, starch, iodized salt (NaCl), base note Aroma mixture (meat/Pork), Vitamin Mineral Premix, Top note Aroma mixture (meat/Pork), Soy protein isolate (e.g. Supro 37 from Dupont Solae), Rapeseed oil, color Red Beet P-WS.

The relative amounts of each ingredient can be the same as those shown in example 1.

The mixture can be mixed for about three minutes to form homogeneous dough. This dough can then be pumped at 15 kg/h.

A slit die can be connected to the exit of the extruder. The temperature of the die can be maintained below 100°C. Coloring ingredients can be injected to adjust the extruded product color. Flavor ingredients can be injected to reproduce beef or pork meat organoleptic properties. For example, they can be injected as an emulsion.

The extrusion and die flow and temperature can be equilibrated.

The plant protein extrudate should have a water content above 45g/100g. This ensures hydration of the protein.

The extrudate should remain at a moisture above the glass transition moisture of the protein or protein blend, which is used, at the consumption temperature (30-60°C) (after frying or baking) of the finished product. The protein with the highest glass transition moisture at 50°C should be taken into account to define the minimum moisture of the semi-finished texturize product.

If the protein extrudate moisture after extrusion is below the minimum value, then the protein extrudate can be rehydrated. This can be done either by soaking in water or boiled in a vegetal broth. This can be done before frying or cooking to ensure the non-brittle texture of the finished product.

The minimum moisture should be defined as a function of the protein composition of the extrudate.

### Plant protein dispersion

The plant protein dispersion in the method of the invention is prepared by mixing the respective amount of soy protein isolate (SPI) with water. The concentrations can be 14, 15, or 16% SPI in water. Additionally, samples may contain 0.2 M, 0.3 M or 0.4 M NaCl. SPI, water and if necessary NaCl can be mixed in a grinder, preferably for about 90 s. After the mixing the dispersion can be dispensed and heated. Each protein gel can be heated at about 85 °C for about 15 min, 30 min or 45 min.

### Fat mimetic

For preparation of protein dispersion, a SPI dispersion of about 10 % (w/w) can be prepared by mixing. First the mixing can be performed at about 1000 rpm for about two minutes. It can then be stirred at about 1000 rpm for about one minute and then at about 500 rpm for about another 27 min.

The dispersions can be pretreated at about 75 °C, 85 °C, or 95 °C, for example in a water bath. The samples can be heated for about 30 min at the respective temperature. To some of the protein dispersions NaCl can be added at the following concentrations: about 0.2 M, 0.4 M and 0.6 M. Depending on the amount of NaCl, the weight of the added water can be lowered about the respective amount.

Emulsions can be prepared with about 70% (w/w) oil and about 30% of, for example, a 10% soy protein dispersion, so that a final protein concentration can be about 3%. The NaCl concentration can be about 0.2 M, 0.4 M or 0.6 M in the protein dispersion. These concentrations equal about 1.29%, 2.57%, 3.86% SPI in the dispersion and about 0%, 0.38%, 0.77%, 1.16% in the emulsions. Emulsions can be homogenized while adding canola oil into the protein dispersion. The homogenizer may be operated at about 20,000 rpm for about 3.5 min.

The emulsions can then be heated and subsequently stored at about 2 °C. The heat treatment can be set to about one hour. This ensures a core temperature of about 85 °C for about 30 min, regardless of the preheating treatment of the samples.

Large scale production of emulsion gels may be performed, for example by means of a high-shear rotor-stator-homogenizer. An SPI dispersion, for example a 10% SPI dispersion may be produced. Hydrochloric acid may be added, to reach a final pH of 7.0 ± 0.5. Mixing may be conducted at about 3500 rpm for about 180 s. In a second step the protein dispersion can be mixed for about 30 min at about 90 °C with about 500 rpm. At the same time the required amount of canola oil can be heated to about 35 °C. To produce the emulsion, the protein dispersion and canola oil can be added into separate vessels of a high-shear vacuum homogenizer. Then oil and protein dispersion can be homogenized under vacuum. The canola oil should be slowly added to the main vessel to prevent the wrong type of emulsion from being formed. The emulsion can be homogenized for about 5 min. with the procedure being terminated before the temperature rose above about 70 °C.

The finished emulsion can then be filled into casings by use of a vacuum filler, and heated in a ripening chamber at about 85 °C and about 99% relative humidity for about 30 min after the core temperature reaches about 85 °C. A cold water shower can be applied for about 10 min followed the heating period before storage in a cold chamber at about 2 °C.

### Comminution of the plant protein extrudate

The plant protein extrudate may be comminuted using a meat grinder, for example with an 8 mm and 13 mm hole plate. Comminuted extrudates may also be obtained by use of a bowl chopper, for example for at least 1 minute.

The extrudate may first be cooked in a broth for about 10 or 15 min. A broth may be prepared containing about 18 g/L vegetable stock powder in water. After cooking, the extrudate may be comminuted, for example in a bowl chopper for about 1.15 min. The comminuted extrudate pieces can then be covered in gluten powder or in a gluten and SPI powder mixture before mixing.

### Comminution of the fat mimetic

The emulsion gels can be comminuted using, for example, a meat grinder with a 13 mm hole plate. Additionally, a bowl chopper may be used. The emulsion gel may be chopped or cut for about 8 s in a bowl chopper at level one, and then stored at about 2 °C. Comminuted emulsion gels with about 0.2 M NaCl are most preferred.

### EXAMPLES

Soy protein isolate (SPI) was Supro EX 37 HG IP (protein content minimum 90% on dry basis according to the manufacturer) from Solae Europe S.A. (Geneva, Switzerland). The canola oil and frying oil was purchased from MEGA - Das Fachzentrum für die Metzgerei und Gastronomie eG (Stuttgart, Germany). Sodium chloride (NaCl) and hydrochloric acid (HCl) were obtained from Carl Roth GmbH and Co. KG (Karlsruhe, Germany). Hydrochloric acid (ROTIPURAN^{®} p.a., 32%, Carl Roth GmbH and Co. KG) was of analytical grade and was diluted to 6 M with distilled water. It was only used in the pilot plant an did not come in contact with other chemicals). High moisture extruded plant proteins were developed by wet extrusion.

### Example 1 - Not according to the invention

### Preparation of extrudate

A Twin Screw Extruder (TSE) was used to prepare a structured product having aligned fibers on the basis of wheat gluten in combination with pea proteins. A dough was prepared in a Planetaria Tekno mixer at 30 rpm by mixing the following ingredients:

| **Ingredients** | **% wb** |
|---|---|
| Pea protein isolate (Roquette) | **12.00** |
| Pea protein isolate (Cosucra) | **12.00** |
| Vital Wheat Gluten | **10.40** |
| Water | **53.80** |
| Pea protein TVP MICRONIZED | **7.80** |
| Salt NaCl lodised | **0.50** |
| Base note Aroma mixture (meat/Pork) | **1.70** |
| Vitamin Mineral Premix | **0.05** |
| Top note Aroma mixture (meat/Pork) | **0.12** |
| Soy protein isolate Supro 37 | **0.90** |
| Rapeseed oil | **0.69** |
| color Red Beet P-WS | **0.06** |

The mixture was mixed during three minutes to form a homogeneous dough. This dough was then pumped to the first barrel of the extruder at 15 kg/h.

A slit die was connected to the exit of the extruder. The temperature of the die was maintained below 100°C. Flavour and colouring ingredients were injected in the extruder to adjust the extruded product color and flavor to reproduce pork meat organoleptic properties.

After equilibration of the extrusion and die flow and temperature, a texturized product with fibers aligned in average perpendicular to the flow of dough at the exit of the slit die was obtained.

### Example 2 - Not according to the invention

### Development of fat mimetics (Emulsion Gels)

For preparation of protein dispersion, a 10 % (w/w) SPI dispersion was prepared by means of the mixing device Stephan UMC 5. First the mixing was performed at 1000 rpm for two minutes to assure well mixing and wetting of all protein powder. An optical control was performed to check whether some powder was not suspended in water by using a hand scraper. After that the sample was stirred at 1000 rpm for one more minute and then at 500 rpm for another 27 min.

The dispersions were pretreated at four different conditions: 25 °C (no preheating), 75 °C, 85 °C, and 95 °C. The preheating was conducted using a preheated circulating water bath Haake B-N3 with an additional overhead mixing system using an anchor impeller (Heidolph Instruments GmbH & CO. KG) to allow mixing while heating. The samples were heated for 30 min at the respective temperature. To some of the protein dispersions NaCl was added at the following concentrations: 0 M, 0.2 M, 0.4 M and 0.6 M. Depending on the amount of NaCl the weight of the added water was lowered about the respective amount.

All emulsions were prepared with 70% (w/w) oil and 30% of the 10% soy protein dispersion, so that a final protein concentration was 3%. The NaCl concentration was varied from 0 M, 0.2 M, 0.4 M and 0.6 M in the protein dispersion. These concentrations equaled to 0%, 1.29%, 2.57%, 3.86% SPI in the dispersion and 0%, 0.38%, 0.77%, 1.16% in the emulsions. Emulsions were created using the homogenizer SilentCrusher M (Heidolph Instruments) while adding canola oil into the protein dispersion. The homogenizer was operated at 20,000 rpm for 3.5 min. The samples, which additionally contained NaCl, were later transferred into a mixer and the respective amount of NaCl was added. Those samples were mixed twice for 15 s on level two with a short break in between during which the sample was scraped off the walls of the device to assure homogenous mixing. The addition of salt has to be done at this point of production, as addition to the protein dispersion before emulsification caused instability of the formed emulsions.

After the emulsions were prepared, approximately 25 g of emulsion was filled into ten 30 mL Nalgene beakers. Eight of those beakers were heated for 60 min at 85 °C in a preheated water bath and subsequently stored at 2 °C overnight. The heat treatment was set to one hour to ensure a core temperature of 85 °C for 30 min, regardless of the preheating treatment of the samples. Unheated emulsions, representing the control samples, were directly put for storage at 2 °C after homogenization.

The produced emulsion gels were characterized according to their gel strength. A material property measurement device, i.e. a texture analyzer (Instron, Model 3365) was used to investigate the hardness of the samples using a puncture test. A cylindrical stainless steel geometry (diameter 32 mm) penetrated the samples at a speed of 1.5 mm/s up to a deformation of 75%. Each emulsion gel was measured eight times and the average maximum force and force at 25% deformation with the corresponding standard deviations were determined. Additionally, the optical appearance of the emulsion gels was assessed visually.

### Example 3 - Not according to the invention

### Large scale production of emulsion gels

Large scale production (10 kg) of emulsion gels was performed by means of a high-shear rotor-stator-homogenizer (MaxxD Lab, FrymaKoruma AG). First, a 10% SPI dispersion was produced. The respective amount of SPI and on the needed amount of water as well as hydrochloric acid were added, to reach a final pH of 7.0 ± 0.5. The mixing was conducted at 3500 rpm for 180 s, with a break after 60 s during which the walls were scraped with a hand scraper to assure all SPI was homogeneously mixed. In a second step the protein dispersion was transferred into the Stephan Universal Machine (UMC 12, A. Stephan u. Söhne GmbH & Co.) with a connected water bath. The dispersion was mixed for 30 min at 90 °C with 500 rpm. At the same time the required amount of canola oil was heated to approximately 35 °C. Exceptions from this procedure are mentioned explicitly in later examples. To produce the emulsion, the protein dispersion and canola oil were added into separate beakers of a high-shear vacuum homogenizer. Then oil and protein dispersion were homogenized under vacuum (450 ± 50 mbar) at 5000 rpm. There, the canola oil was slowly added to the main vessel to prevent the wrong type of emulsion from being formed (i.e. a W/O instead of the desired O/W system). The emulsion was homogenized for about 5 min. with the procedure being terminated before the temperature rose above 70 °C.

The finished emulsion was then filled into 60 mm plastic casings by use of a vacuum filler. The filled casing were heated in a ripening chamber (NESS-Smoke GmbH & Co. KG) at 85 °C and 99% relative humidity for 30 min after the core temperature reached 85 °C. A cold water shower (10 °C) for 10 min followed the heating period and the final emulsion gels were stored in the cold chamber at 2 °C until usage.

The emulsion gels were comminuted as an animal fat mimetic in a burger patty. To follow procedures for a meat burger preparation the emulsion gel was comminuted using a meat grinder with a 13 mm hole plate (Maschinenfabrik Seydelmann KG). Additionally, comminution in a bowl chopper was tested. There, the emulsion gel was chopped/cut for two rounds (i.e. 8 s) in a bowl chopper (MTK 661 Garant) at level one. After that, the emulsion gel was stored in plastic bags under protective gas (Protadur C 20, 80% Nitrogen and 20% carbon dioxide) at 2 °C.

In order to develop a plant-based binder, a protein dispersion was first prepared. The preparation of the protein gels which were investigated for their ability to act as binder for the burger patties were prepared by mixing the respective amount of SPI with water. The tested concentrations were 10%, 12%, 14% and 16%. For the two best combinations additionally samples containing 0.2 M, 0.3 M or 0.4 M NaCl were prepared and analyzed. SPI, water and if necessary NaCl were mixed in a grinder (KitchenAid) for 90 s at level two. After 30 s and 60 s the grinder was stopped to scrape of the sample from to walls of the device and assure good mixing. After the mixing the dispersion was filled in 30 ml Nalgene beakers, closed and heated in a water bath. Each protein gel was heated at 85 °C for 15 min, 30 min or 45 min to determine the appropriate heating time, protein and salt concentration.

The texture measurements of the protein gels were conducted. All the samples were measured in double determination and each measurement was conducted six times.

Different rheological measurements were conducted to gain further insight into the properties of the different SPI gels. The device used for all measurement was a rotating rheometer MCR301 (Anton Paar Germany GmbH) with a plate-plate geometry. The diameter of the metal plate was 25 mm (PP25). For the unheated samples, a spoonful of the SPI dispersion as added on the lower plate. The measurements gap was set to 1 mm. For the heated samples with 20% SPI the gel was cut by hand with a scalpel and the upper geometry was lowered on the sample up to the distance, where a force of 5 N was recorded. All measurements were conducted in duplicate and each sample was measured twice.

The linear viscoelastic range of the gels was determined by the amplitude sweep. Therefore, an oscillatory deformation ramp was run from 0.01% to 500% deformation angular frequency of ω = 10 rad/s, during which storage and loss moduli (G' and G") were measured. The linear viscoelastic range is defined as the deformation area where the storage and loss moduli are constant, meaning that the gel was not destroyed by the deformation. All measurements were performed at 25 °C and the samples were tempered to this temperature for 1 min.

To investigate the time-depended behavior of the dispersions a frequency sweep was conducted over the range of 100 rad/s to 0.1 rad/s at a strain of γ = 1% while the storage and loss moduli (G' and G") were recorded. The deformation was performed oscillatory and was set to 1%. All measurements were performed at 25 °C and the samples were tempered to this temperature for 1 min.

In contrast to the upper to measurements which only investigate the small deformation behavior, the flow curve uses shearing instead of oscillation for the deformation of the gel. Therefore, large deformation properties of the SPI gels could be determined with this measurement. The shear rates were varied from 0.01 to 100 1/s while the shear stress was recorded and all measurements were conducted at 25 °C.

### Example 4 - Not according to the invention

### Development of Vegan Burger patties

All respective trials were conducted with the initial extrudate developed internally (pure gluten base), using emulsion gels manufactured with transglutaminase. To investigate an appropriate range for the mixing ratios of the three compounds used in the patty production, small batches with varying extrudate concentration (55%, 65%, 75%), varying SPI concentration (10%, 20%, 30%) and a fixed amount of emulsion gel (15%) were produced. The SPI concentration was varied between 14% and 16% SPI. To investigate the influence of the fat mimetics (emulsion gel), one batch containing 0% emulsion gel was produced. Patties of equal weight and height were then formed, fried in a pan and investigated sensorially. These pre-trials were used to investigate which binder - extrudate combinations work best for the production of patties.

The patties for pre-trials were produced by manual mixing. To standardize the mixing of the vegan burger masses, the mixer at level one for 30 s was used for the following experiments. Those conditions enable a homogenous mixing without further comminuting the individual structural entities (extrudates and fat particulates).

The extrudates were comminuted for use in a burger application. For the comminution, the frozen extrudates were thawed at 6°C overnight before processing. Then different comminutions were produced. The first extrudates for the pre-trials were comminuted using a meat grinder (Maschinenfabrik Seydelmann KG) with an 8 mm and 13 mm hole plate. The final extrudates were comminuted with a 13 mm hole plate of the meat grinder and additionally less comminuted extrudates were obtained by use of a bowl chopper (MTK 661 Garant). Coarser comminutions were produced by treating the extrudate for 1.15 min with a bowl chopper.

A standardized frying procedure was used. The frying was set to 2.30 min at 180 °C using a contact grill (Nevada). The core temperature of the patties reached > 85 °C after frying. A metal distance holder with a height of 1.4 cm was fabricated, and added onto the grill to achieve a constant thickness of patties. The patties were then placed on the grill and covered with aluminum foil before frying. Three burgers were fried on the grill simultaneously in a horizontal line.

Textural investigation of the patties was conducted with the material property measurement device (Instron). Measurements of the burger patties were performed with patties that had a diameter of at least 5 cm. The Instron was used to investigate maximum strength, fracture strain and fracture force of the patties. It was also used to investigate the hardness springiness, and cohesiveness of patties.

The textural impact of two different binders (12% and 20% SPI) were investigated at 5 different concentrations (10%, 17.5%, 25%, 32.5% and 40%). 12% SPI represent a weak gelling binder and 20% SPI a strong gelling binder.

For comminution, protein extrudates were thawed overnight at 6 °C and then comminuted in 1 ± 0.2 kg batches in the bowl chopper (MTK 661 Garant) for 1.15 min at level one. After that, the extrudate was immediately packed in small batches and frozen until usage.

Emulsion gels were produced by heating in UMC 12 mixing device for 30 min. at 90 °C. After the emulsification step the emulsion was transferred into a bowl chopper (MTK 661 Garant) and 0.2 M NaCl were added while mixing the emulsion for 2.15 min at level one. After mixing, the emulsion was heated in a ripening chamber. Then, the emulsion gels were cooled over night at 2 °C. The emulsion gel was comminuted in a bowl chopper (MTK 661 Garant) for 12 s and then packed under protective gas and stored at 2 °C until usage.

All the burger masses were produced with 20% emulsion gels as animal fat mimetic. Depending on the amount of binder (10%, 17%, 25%, 32.5% and 40%) the protein extrudate content was respectively lowered about the amount the binder concentration increased. The burger mass was mixed and then divided into 27 different 30 g pieces which were then formed with a burger press to patties of 5 cm diameter. These patties were placed on and covered with oiled aluminum foil.

The burger patties were fried with a contact grill (Nevada) at 160 °C for 3.5 min. 30 min prior to frying the contact grill was turned on to assure it reached the desired temperature. The contact grill was oiled with frying oil to prevent burning.

### Example 5 - Not according to the invention

### Development of Fat Mimetics

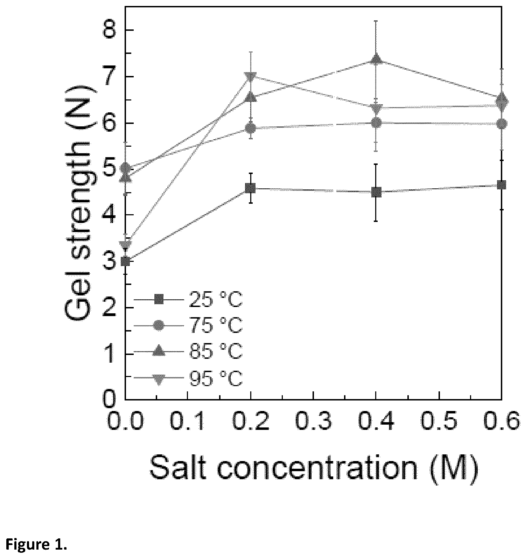

The strength of the emulsion gels were measured by means of a penetrative test applied with the material measurement device, Instron Model 3365. All emulsion gels were measured ten times. Different strength values for the respective emulsion gels at 75% deformation are presented in **Figure 1****.**

The progression of the strength recorded at both deformations shows similar behavior, except for the quantitative values of the forces. At 75% deformation higher values for the gel strength were measured (**Figure 1**). For the sample at 25 °C a clear increase of the gel strength was observed between the emulsion containing 0 M NaCl (3.01 ± 0.27 N) and all the samples containing NaCl (approximately 4.5 N). Between the samples containing 0.2, 0.4 and 0.6 M NaCl no significant difference in gel strength was observed. Preheating the protein dispersion to 75 °C and 85 °C increased the gel strength to 5.00 ± 0.56 N for 75 °C and 4.79 ± 0.35 N for the gels without additional salt. Preheating at 95 °C led to a maximum strength of 3.35 ± 0.23 N.

Emulsion gels produced by use of a protein dispersion that was preheated at 85 °C had increased strengths of up to 6.54 ± 0.52 N and 7.36 ± 0.83 N for NaCl concentrations of 0.2 M and 0.4 M NaCl, respectively. At a NaCl concentration of 0.6 M the gel strength again decreased to about 6.5 N. A preheating at 75 °C showed little increase in gel strength between emulsion gels containing 0 M NaCl with a strength of 5 N and emulsion gels containing any concentration of salt (approximately 6 N). A preheating treatment of 95 °C caused a strong increase in gel strength for emulsion gels produced with 0.2 M NaCl. The maximum strength reached 7.02 ± 0.52 N. At higher salt concentrations the strength decreased to around 6.32 ± 0.94 N for 0.4 M NaCl and 6.38 ± 0.45 for 0.6 M. Strength values at 25% deformation showed the same trend for all four emulsion gels, albeit all values were lower compared to 75% deformation. The lower values for samples preheated at 95 °C might be caused by too much of a denaturation, causing increased hydrophobic attraction and leading to the formation of large, dense aggregates. The proteins may be interacting too strongly with each other, which may lower their emulsifying capacities. As a result, emulsion gels would subsequently get weaker. The addition of NaCl caused all emulsion gels to increase in strength.

Visual investigation of the gels revealed differences in the formed gel structures. Emulsion gels containing more salt tended to form more particulate and crumbly gels, in contrast to very creamy, and more homogenous gels when produced without NaCl. Visual analysis of the respective emulsion gels were in agreement with the measurements made by the texture analyzer.

Based on these results, emulsion gels produced with the SPI dispersion preheated at 85 °C for 30 min. were to be used because they showed the strongest gel structure. Since the addition of NaCl had a strong impact on the gel structure that was also visible, gels with and without 0.2 M NaCl were tested for their applicability in burger patties.

For the application as an animal fat replacer in vegan burger patties the emulsion gels needed to be comminuted into small, but still visible, and sensorially active particles. Therefore tests were performed to find an applicable procedure for the comminution. As mentioned above, two kinds of emulsion gels (0 M and 0.2 M NaCl) were investigated according to their comminution behavior. The comminution was carried out with a bowl chopper. The emulsion gels containing NaCl were prepared as described above. To incorporate the salt an additional step was included. After the homogenization step the emulsion was transferred into a bowl chopper and the respective amount of salt was added. The salt was stirred in for 34 turns of the bowl chopper at level one. Emulsion gels produced without NaCl "smeared" when chopped with the described method, i.e. instead of a conglomerate of individual particles, a single paste-like mass was obtained. In contrast, emulsion gels containing 0.2 M NaCl showed an improved comminution behavior, i.e. small separate particles were obtained. Those results are in accordance with the texture analysis where emulsion gels containing 0.2 M NaCl showed higher gel strength (6.54 ± 0.52 N) compared to 0 M NaCl (4.79 ± 0.35 N). Additionally, the comminution behavior corresponded to the structure description of the optical investigation of the gels.

The emulsion gel without NaCl turned into a paste so that no individual fat particles could be observed after comminution. This paste is inappropriate for burger patty applications. Due to the mechanical stress applied while comminuting the material, the gel started to lose its integrity and no more particles were visible within the emulsion gel. It is interesting to note though that no oiling out was observed, i.e the system did not break. With addition of NaCl to the emulsion, the gel got harder and particulate structures could be created in the bowl chopper. Comminuted emulsion gels with 0.2 M NaCl were deemed most appropriate for use in burger applications.

### Example 6

### Development of a Plant-Based Binder (Protein Dispersion)

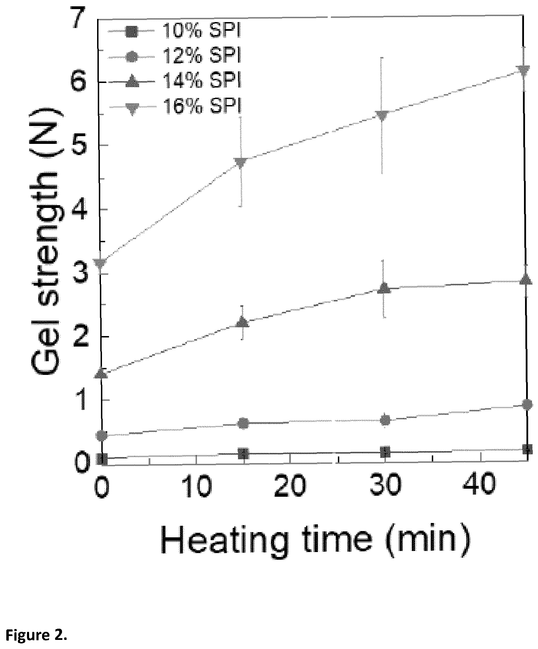

For the development of vegan burger patties, the fat mimetics and protein extrudates need to adhere to each other. This internal cohesion was to be achieved by means of a plant-based binder. The binder was to have mostly viscous properties prior to heating so as to allow patties to be formed, but should transition to a gel upon heating to cause the burger patty to become solid. By mixing a suitable binder with the other two components (extrudates and fat particles), a deformable mass was to be created. A highly concentrated SPI dispersion was used since that was also used in the manufacture of the fat system, and thus represented already present compounds. **Figure 2** shows the impact of different heating times on the gel strength of gelled SPI dispersion containing varying concentrations of SPI. The strength was again measured with a material property measurement device, i.e. an Instron, Model 3365. Data shown represents the mean value of ten measurements and the respective standard deviation.

SPI dispersions containing 10% and 12% SPI showed little change in gel strength as a function of heating times indicating that very weak gels were formed or no gelation occurred. The gel strength stayed constantly around 0.1 N for 10% SPI and 0.5 N for 12% SPI. For protein dispersions containing 14% SPI the gel strength increased from 1.5 N when not heated to 2.7 N when heated for 45 min. The 16% SPI dispersion had an initial gel strength of around 3 N that increased to a little over 6 N, when the dispersion was heated for 45 min. As such and not surprisingly, higher SPI concentrations cause gels to assume higher strengths after sufficient heating times. It should be noted that samples containing 14% and 16% exhibited already gel like properties without any heating, whereas 10% and 12% SPI had more liquid-like properties.

Without wishing to be bound by theory, higher gel strengths with increasing heating times may have been caused by a higher degree of unfolding since proteins had more time to undergo conformational changes. When SPI is heated, the globular proteins denature and start to unfold. Unfolded proteins have mostly hydrophobic groups exposed on the surface, whereas hydrophobic patches are buried inside the globular protein structure. An unfolding thus enables hydrophobic areas on different proteins to interact with each other leading to network formation and therefore to gelation of the dispersions. At higher protein concentrations, the proteins bind more water and are more densely packed, so that interactions between molecules is favored. Therefore, the gel strength is strongly dependent on the protein concentration. For SPI concentrations of 10% and 12%, even long heating times did not cause formation of a strong gel. In those samples the number of protein-protein interactions was simply too low to cause a strong gel formation that entraps solvent. Therefore, no form stable gel was formed.

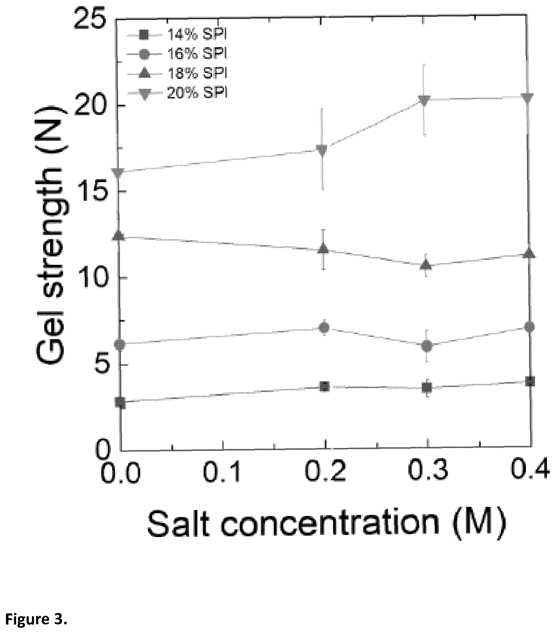

It was concluded from this that these SPI concentrations are insufficient for the use as a binder in vegan burger patties, since a formation of a gel network that is able to keep the comminuted ingredients together is required for the application. In contrast, the gel strength increased with increasing heating times for protein dispersions with 14% and 16% SPI. Due to higher gel strengths of the samples with 14% and 16% SPI those two samples and additionally protein dispersion containing 18% and 20% SPI were used to further investigate the impact of NaCl addition on the gel strength of the protein dispersions. For that purpose, 0.2, 0.3 and 0.4 M of NaCl were added to the protein dispersion before heating. The results of the gel strengths measured with the Instron at 75% deformation are shown in **Figure 3****.**

**Figure 3** shows a slight increase for the gel strength of the SPI dispersion containing 14% SPI. The gel strength increased from 2.82 ± 0.25 N to 3.56 ± 0.17 N when 0.2 M NaCl were added. At higher NaCl concentrations the increase in gel strength was less distinct. The maximum force at 0.3 and 0.4 M NaCl was 3.45 ± 0.48 N and 3.74 ± 0.12 N, respectively. SPI concentrations of 16% caused higher gel strengths at the same NaCl concentrations compared to 14%. It can be seen that without NaCl the gel strength was already twice as high as for the 14% system with a maximum gel strength of 6.13 ± 0.35 N. This gel strength was further increased to 6.95 ± 0.45 N upon addition of 0.2 M NaCl. A slight decline was noticed at 0.3 M where the maximum gel strength was lowered to < 6 N. For 0.4 M NaCl the gel strength seemed to be very similar to the gel strength of samples containing 0.2 M NaCl. The protein dispersions containing 18% SPI had a gel strength of 12.41 ± 0.96 N for the dispersions without NaCl and 11.5 ± 1.14 N, 10.52 ± 0.63 N, 11.12 ± 0.63 N for the samples with 0.2 M, 0.3 M and 0.4 M NaCl, respectively. This constitutes a slight decrease in gel strength after NaCl was added. For the gel strength of the protein dispersion with 20% SPI, the strength increased from 16.13 ± 2.27 N (0 M NaCl) to 20.14 ± 2.04 N (0.4 M NaCl). This increase in gel strength with increasing NaCl concentration can be explained by the fact that at higher NaCl concentrations the electrostatic repulsion between the proteins is screened which facilitates intermolecular network formation. Higher numbers of intermolecular interactions due to hydrophobic or electrostatic interactions may increase gel strength.

The results showed that protein dispersions with 10% and 12% SPI, respectively, formed only weak gels when heated at 85 °C. In contrast, the gel strength increased with increasing heating time for protein dispersions with 14% and 16% SPI. 18% and 20% SPI dispersion show gel behavior before heating is applied. To investigate the influence of the binder on the overall textural properties of the burger patties two SPI concentrations were further investigated. According to the presented results 12% SPI was chosen as a weaker binder, since the formed gels were weak, even after long heating times and 20% SPI which represents a strong gel.

Rheological measurements were conducted with a SPI concentration (12% SPI) that showed no strong gels when analyzed on gel strength and a concentration that showed high gel strengths (20% SPI) to further characterize them.

20% SPI dispersion show similar courses for heated (D) and unheated (C) dispersions. Independent of the frequency the storage modulus is always higher than the loss modulus. The ratio between the storage and loss modulus is increasing from approx. 4 for the unheated to > 6 for the heated dispersions. Therefore, it is concluded, that those protein gels do only show solid gel behavior. In contrast to that, the 12% SPI gels show a transition from more elastic to more viscous fluid properties at high frequencies indicating weaker intermolecular interactions. Therefore, the inner molecular order is affected at high speed deformation . This concludes higher gel strength for 20% SPI gels compared to 12% SPI gels.

The impact of large deformation treatments on SPI gels is performed by means of a shear rate ramp varying from 0.01 - 100 1/s for the unheated SPI dispersions. The shear stress at higher protein concentrations (20%) exceeded the shear stress of 12% SPI. Both curves showed strong increases in shear stress at shear rates between 0.01 1/s and 0.03 1/s. This is due to the fact, that especially at low shear rates, the resolution of the measurement device reaches its limits and other slipping and friction effects have big impacts on the measurement signal. For the samples with 12% SPI the shear stress is increasing linear above shear rates > 0.3 1/s. This indicates a behavior comparable to a Newtonian fluid. The protein dispersion containing 20% SPI start with shear stresses of 190 Pas and shows a plateau from 0.03 1/ s to 0.1 1/s. At higher shear rates the shear stress increases to a maximum at 10 1/s. Above this shear rate the shear stress is decreasing again due to the destruction of the gel.

### Example 7 - Not according to the invention

### Development of Vegan Burger Patties

Extrudates produced with the 13 mm hole plate were used for further studies. Trials of the production of patties using respective extrudate showed a very homogenous mass. The burger mass showed a very uniform composition. Neither fat, nor extrudate pieces appear to be visible. Therefore, it is more comparable to an emulsified sausage type of product.

Compression experiments of patties produced manually and by use of the kitchenAid were performed. The maximum force for the manually mixed burger patties equals 525.87 ± 45.24 N and 553.52 ± 38.33 N for the patties produced with the kitchenAid. The fracture forces are also very similar with a value of 30.15 ± 5.14 N for the manually produced and 26.73 ± 4.45 N for the kitchenAid mixed patties. In both types of burger patties the components are distributed homogenously, so that both measurements reach the same values. Therefore, it can be assumed that the mixing by hand and with the kitchenAid are comparable to each other and for simplification, only the kitchenAid was used for further production of patties.

To improve the textural properties of the patties different binders were used. Besides the already presented SPI dispersions, gluten powder and gluten-SPI mixtures were tested. Moreover, unwanted hardening of cooked patties that originated from extrudates exhibiting a glass transition upon cooling had been observed. Thus, a broth was prepared containing 18 g/L vegetable stock powder in water and the extrudate were cooked for 10 or 15 min, and after that comminuted in a bowl chopper for 1.15 min. The comminuted extrudate pieces were then covered in gluten powder or in a gluten and SPI powder mixture before mixing. To some of the sample additional water was added to allow soaking of the proteins. The burgers were analyzed optically and haptically.

After frying, the burger patties produced with gluten powder had an appealing appearance and exhibited adhesion. The patties produced with extrudate that was covered in gluten and SPI powder showed great strength before and after frying. The strength was higher compared to other burger patties produced with SPI dispersions alone. No protein aggregates were observed within this mixture. To increase the swelling of the proteins and therefore improve the interactions some additional water (5%) was added to the recipe for the patties.

### Example 8 - Not according to the invention

### Influence of Binder Strength and Concentration on Texture of Patties

Different textural measurements were performed with the patties, a non-destructive measurement (20% deformation) with and without a relaxation period was conducted. Deformation of 60% was applied for the destructive measurement.

The universal texture analyzer was used to perform a 20% deformation of the burger patties and different textural properties were investigated. The amount of binder of those burgers was varied between 10% and 40% to investigate the impact of this component on the properties.

For the same binder concentration, the patties containing 20% SPI generally exhibited higher gel strength than burger patties containing 12% SPI in the binder. Hence, the maximum force of burger patties containing 20% SPI started with a strength of 25.13 ± 10.71 N for 10% binder in the burger mass, which was more than halved to a maximum force of 12.63 ± 1.99 N for 40% binder in the burger mass. Burger masses containing 12% SPI had a maximum strength of 21.94 ± 2.10 N at 10% binder concentration which was tremendously decreased to 4.06 ± 2.34 N at 40% binder concentration. The difference in strength increased at higher binder concentrations, as for those samples the impact of the binder on the textural properties got higher due to the higher amount of binder in the recipe. As the 20% SPI gels were higher in gel strength than the 12% SPI gels.

The burger patties containing 20% SPI showed different breaking behavior for the two binder concentrations. For 20% SPI in binder the samples containing 10% binder showed break points indicated by the black arrows. This break points indicated the breaking of the structure and yielding of the burger patty. At higher binder concentrations, the strength of the overall patty got stronger influenced by the binder properties. The break point is reached after longer time and therefore stronger compression. Patties containing 12% SPI on the other hand showed the break point at lower strength and the break was less distinct compared to the samples containing 20% SPI in binder. At high binder concentrations (40%) the break point was almost not detectable anymore. This is caused by the big impact of the binder on the texture of the patty. The patty was smearing apart rather than breaking. The patties produced with 20% SPI in binder led to stronger interaction within the patty causing break behavior of the patty. At lower SPI concentrations this interactions were lowered and the patties were very soft. Their behavior under compression can by explained as flowing apart instead of breakage of the inner structure.

All burger patties showed decreasing values for rising binder concentrations in the burger mass. At 10% binder the maximum force was nearly the same for both SPI concentrations (166.14 ± 73.92 N and 170.99 ± 6.89 N). Above these concentrations the difference between the binders grew. An exception was observed at 25% binder, where the maximum strength of 20% SPI patties was lower compared to the ones produced with 12% SPI. For all the other samples the patties produced with 20% SPI showed higher maximum strengths compared to the ones produced with 12% SPI. Higher strength for the gels produced with 20% SPI are caused by the denser gel network enabled due to higher concentration of proteins within the binder. Because of that, more intermolecular interactions could contribute to the strength of the binder and also to the overall strength of the patty.

## Claims

1. A method of making a ground meat analogue product, said method comprising
a. Preparing a plant protein extrudate by wet extrusion;
b. Preparing a plant-based binder, wherein the plant-based binder is prepared by;
(i) Mixing 14 -16 wt% soy protein isolate with water, and adding sodium chloride to the mix at a final concentration of 0.2 - 0.4M
(ii) Heating until gel formation, preferably to 85°C
(iii) cooling
c. Preparing a fat mimetic by emulsifying a protein dispersion and a lipid phase;
d. Comminution of the plant protein extrudate
e. Comminution of the fat mimetic;
f. Mixing the plant-based binder with the comminuted plant protein extrudate and the comminuted fat mimetic;
g. Optionally molding into a shape.

2. A method according to claim 1, wherein the plant protein extrudate has a water content of not less than 45% w/w.

3. A method according to claims 1 and 2, wherein the fat mimetic is prepared by emulsifying a mixture of 30% w/w of a protein dispersion, preferably comprising a protein isolate, and 70% w/w of a lipid phase, preferably canola oil, or a mixture of canola oil and solid fat.

## Patentansprüche

1. Verfahren zum Herstellen eines Hackfleischanalogprodukts, das Verfahren umfassend
a. Herstellen eines Pflanzenproteinextrudats durch eine Nassextrusion;
b. Herstellen eines pflanzenbasierten Bindemittels, wobei das pflanzenbasierte Bindemittel hergestellt wird durch;
(i) Mischen von 14-16 Gew.-% Sojaproteinisolat mit Wasser und Zugeben von Natriumchlorid zu der Mischung bei einer Endkonzentration von 0,2-0,4 M
(ii) Erhitzen bis zu einer Gelbildung, vorzugsweise auf 85 °C
(iii) Kühlen
c. Herstellen eines Fettmimetikums durch ein Emulgieren einer Proteindispersion und einer Lipidphase;
d. Zerkleinerung des Pflanzenproteinextrudats
e. Zerkleinerung des Fettmimetikums;
f. Mischen des pflanzenbasierten Bindemittels mit dem zerkleinerten Pflanzenproteinextrudat und dem zerkleinerten Fettmimetikum;
g. Optionales Ausbilden in eine Form.

2. Verfahren nach Anspruch 1, wobei das Pflanzenproteinextrudat einen Wassergehalt von nicht weniger als 45 Gew.-% aufweist.

3. Verfahren nach den Ansprüchen 1 und 2, wobei das Fettmimetikum durch das Emulgieren einer Mischung aus 30 Gew.-% einer Proteindispersion, vorzugsweise umfassend ein Proteinisolat, und 70 Gew.-% einer Lipidphase, vorzugsweise Rapsöl oder eine Mischung aus Rapsöl und festem Fett, hergestellt wird.

## Revendications

1. Procédé de préparation d'un produit analogue à la viande hachée, ledit procédé comprenant
a. la préparation d'un extrudat de protéine végétale par extrusion par voie humide ;
b. la préparation d'un liant d'origine végétale, dans lequel le liant d'origine végétale est préparé ;
(i) en mélangeant 14 à 16 % en poids d'isolat de protéine de soja avec de l'eau et en ajoutant du chlorure de sodium au mélange à une concentration finale allant de 0,2 à 0,4 M,
(ii) en chauffant jusqu'à formation d'un gel, de préférence à 85 °C,
(iii) en laissant refroidir,
c. la préparation d'une matière grasse mimétique en émulsifiant une dispersion protéique et une phase lipidique ;
d. le broyage de l'extrudat de protéine végétale ;
e. le broyage de la matière grasse mimétique ;
f. le mélange du liant d'origine végétale avec l'extrudat de protéine végétale broyé et la matière grasse mimétique broyée ;
g. éventuellement, le moulage en une forme.

2. Procédé selon la revendication 1, dans lequel l'extrudat de protéine végétale a une teneur en eau d'au moins 45 % p/p.

3. Procédé selon les revendications 1 et 2, dans lequel la matière grasse mimétique est préparée en émulsifiant un mélange de 30 % p/p d'une dispersion protéique, comprenant de préférence un isolat de protéine, et 70 % p/p d'une phase lipidique, de préférence de l'huile de colza, ou un mélange d'huile de colza et d'un corps gras solide.
